# EUROPEAN PATENT SPECIFICATION

(11) **EP 3 248 864 B1**
(45) Date of publication and mention of the grant of the patent: **03.07.2019**
(21) Application number: 16382226.5
(22) Date of filing: 24.05.2016
(51) Int. Cl.: B64C 3/28, B64D 7/00, B64D 33/02

(54) **ARMOURED LEADING EDGE AND MANUFACTURING METHOD THEREOF**
GEPANZERTE VORDERKANTE UND HERSTELLUNGSVERFAHREN DAFÜR
BORD D'ATTAQUE BLINDÉ ET SON PROCÉDÉ DE FABRICATION

(43) Date of publication of application: 29.11.2017
(73) Proprietor: Airbus Operations, S.L., 28906 Getafe (Madrid) (ES)
(72) Inventor: VELEZ DE MENDIZABAL ALONSO, Iker, 28906 GETAFE (Madrid) (ES); GUINALDO FERNANDEZ, Enrique, 28906 GETAFE (Madrid) (ES); GARCÍA NIETO, Carlos, 28906 GETAFE (Madrid) (ES); HONORATO RUIZ, Francisco, Javier, 28906 GETAFE (Madrid) (ES); VOTSIOS, Vasilis, 28906 GETAFE (Madrid) (ES)
(74) Representative: Carpintero Lopez, Francisco

(56) References cited:
- WO-A1-2004/098993
- WO-A1-2011/007074
- DE-A1-102005 060 958
- US-A1- 2008 258 009

## Description

### Object of the invention

The present invention refers to a configuration and a manufacturing method of an aerodynamic surface for an aircraft, such as a wing or a stabilizer, where said aerodynamic surface is provided with an armoured leading edge section adapted for absorbing a bird collision.

The object of the present invention is to provide an aerodynamic surface for an aircraft that minimizes the weight and the cost traditionally involved by leading edge sections adapted to withstand a bird strike.

### Background of the invention

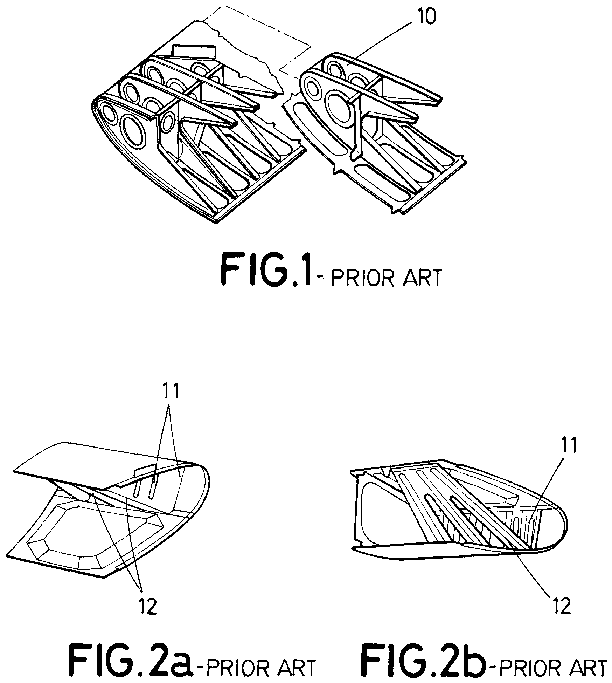

Historically, structural and aerodynamic elements of an aircraft were made from metal. For such aircrafts, leading edge sections were usually manufactured from high-strength aluminum or aluminum alloys. Figure 1 shows an example of these metallic elements, in which aluminum ribs 10 of a leading edge section can be appreciated.

However, along the years, materials used in aviation have considerably evolved with the aim of increasing their stiffness and reducing their weight. With this objective, most of the aircraft manufacturers opted for the use of fiber-reinforced resin materials, i.e. composite materials that have relatively high strength-to-weight ratios.

Although the hardness of these composite materials, metallic reinforcements are still provided at those areas in which the fuselage is altered or disrupted.

Nowadays, leading edge sections are generally made of composite materials, which, although their hardness, have to be usually reinforced by metallic or composite spars or ribs. Figure 2a and 2b show different views of one of these leading edge sections including a pair of metallic spars 11, 12. A first spar 11 is vertically arranged at the outermost part of the leading edge section, and a second spar 12 is diagonally arranged at the rear part of the section.

Also, the leading edge sections of the aerodynamic surfaces of the aircraft (wings, VTP, HTP) are directly and continuously exposed to bird collisions during flight, take-off and landing. These collisions can compromise the aircraft integrity.

For that, airworthiness authorities issued certification regulations governing certain categories of aircrafts requiring that, in the event of damage to a component caused by collision with a bird, the aircraft has to be capable of maintaining a flight long enough to reach a landing site.

Thus, leading edge sections must be designed for withstanding bird strikes, besides their structural and aerodynamic requirements.

Current solutions to achieve a further reinforced leading edge sections, involve the inclusion of auxiliary metallic or composite reinforcement pieces and/or the increase of the thickness of pieces forming the leading edge section, in particular, the outermost part of the nose section.

Document WO 2004/098993 shows a known solution from the prior art and discloses an aerodynamic surface having a high absorption material between the leading edge and the front spar, the high absorption material having a sheet at the back between the material and the front spar.

However, these typical solutions entail an undesirable weight and cost increasing.

Therefore, it has been detected in the aeronautical industry the need of an aerodynamic surface, and a method for manufacturing thereof, which is able to minimize the weight conventionally required for reinforcing the leading edge sections, and which is also able to minimize the cost derived from bird collisions.

### Summary of the invention

The present invention overcomes the above mentioned drawbacks by providing an aerodynamic surface for an aircraft and a method for manufacturing thereof, which reduces the weight and cost traditionally associated to the leading edges sections adapted to withstand bird collisions.

An aspect of the invention refers to an aerodynamic surface for an aircraft comprising a torsion box and a composite leading edge section, the torsion box having a front spar, and the composite leading edge section comprising an outer surface, an inner surface, and a blanket.

The outer surface is shaped with an aerodynamic leading edge profile. The inner surface is internally arranged with respect to the outer surface, being thus also shaped with the aerodynamic leading edge profile.

The blanket is spanwise arranged along the leading edge section between the outermost point of the inner surface and the front spar, and joined to at least two opposing areas of the inner surface. The blanket is thus arranged for protecting the front spar from any damage.

The blanket is made of fibre material having a specific energy absorption ranging from 47 to 72 J•g⁻¹ and a longitudinal wave speed ranging from 6 to 15 km•s^{- 1}. Preferably, said material is aramid fibre, such as Kevlar®, or PBO ((Poly (p-phenylene-2, 6-benzobisoxazole))), such as Zylon®, or Ultra High Molecular Polyethylene (UHMWPE), such as Dyneema®, or polypropylene (PP).

The major part of the blanket is dry fibre. This way, the blanket is configured for absorbing a bird strike, acting as a net. Thus, the blanket cushions the impact of a bird, retaining the bird before reaching the front spar, and thus avoiding causing any damage on the front spar.

Thus, the invention provides an aerodynamic surface adapted to withstand a bird strike, and involving a minimal addition in weight and cost.

This way, the invention offers a solution in which the front spar of the torsion box is prevented from being damaged. Thus, the invention ensures the integrity of structural components of the aircraft, and therefore improving flight safety.

Another aspect of the invention refers to a manufacturing method for producing an aerodynamic surface with a leading edge section adapted to withstand a bird strike.

In the method of the invention, a torsion box having a front spar and a blanket of fibre material is provided. According to the method, a laminate formed by the stacking of composite material layers, is conformed to obtain an outer surface preform with the shape of an aerodynamic leading edge profile. Another laminate from composite materials is conformed to obtain an inner surface preform of the leading edge.

Then, the inner surface preform is internally arranged with respect to the outer surface preform. Further, the outer surface preform, the inner surface preform, and the blanket are assembled together to form a leading edge section preform.

The blanket is spanwise arranged along the leading edge section between the outermost point of the inner surface preform and the front spar, and joined to at least two opposing areas of the inner surface. Thus, the blanket is positioned for absorbing a bird strike, preventing the bird from impacting on the front spar.

The material of the blanket has a specific energy absorption ranging from 47 to 72 J•g⁻¹ and a longitudinal wave speed ranging from 6 to 15 km•s⁻¹. Also, the major part of the blanket is made of dry fibre material. This way, the invention ensures that the blanket maintains the properties of these fibers, which behaves as a net, serving as a barrier and cushioning the bird impact.

Thus, the invention provides a simple and cost-effective manufacturing method for producing an aerodynamic surface equipped with a leading edge section adapted for withstanding bird strikes, with minimal impacts on weight and cost.

### Brief description of the drawings

Preferred embodiments of the invention are henceforth described with reference to the accompanying drawings, in which:
Figure 1.- shows a perspective view of a rib forming a metallic leading edge section of the prior art.
Figure 2.- shows, in drawings (A) and (B), different perspective views of a prior art leading edge section provided with metallic reinforcements.
Figure 3.- shows a cross-sectional view of an aerodynamic surface, according to a first preferred embodiment of the invention.
Figure 4.- shows a cross-sectional view of an schematic representation of an aerodynamic surface according to a second preferred embodiment of the invention.
Figure 5.- shows a cross-sectional view of an schematic representation of an aerodynamic surface according to a third preferred embodiment of the invention.
Figure 6.- shows a cross-sectional view of an schematic representation of an aerodynamic surface according to a fourth preferred embodiment of the invention.
Figure 7.- shows a cross-sectional view of an schematic representation of an aerodynamic surface according to a fifth preferred embodiment of the invention.

### Preferred embodiment of the invention

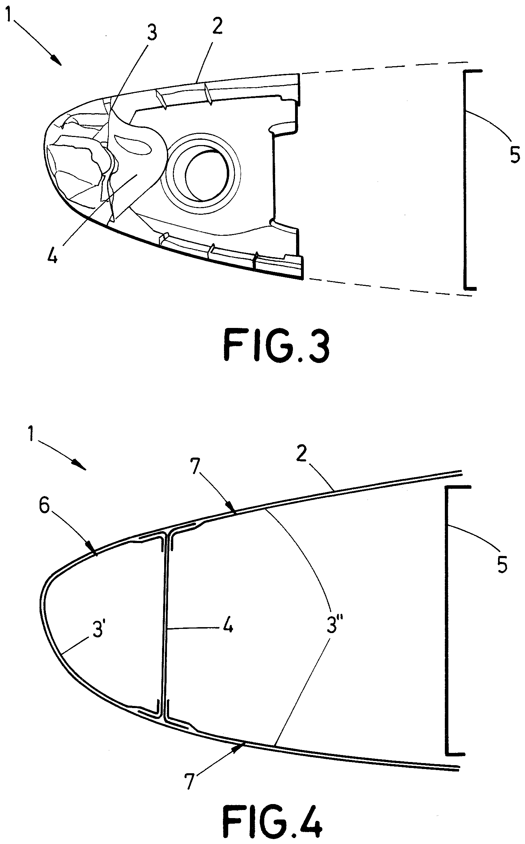

Figure 3 shows an example of an aerodynamic surface 1 for an aircraft according to the invention, which comprises a torsion box having a front spar 5, and a composite leading edge section comprising an outer surface 2, an inner surface 3, and a blanket 4 spanwise arranged between the outermost point of the inner surface 3 and the front spar 5.

The outer surface 2 is shaped with an aerodynamic leading edge profile. The inner surface 3 is internally arranged with respect to the outer surface 2. The blanket 4 is made of fibre material, and is joined to at least two opposing areas of the inner surface 3 for retaining a bird before reaching the front spar 5. The major part of the blanket 4 is made of dry fibre material in order to keep its optimal properties against a bird strike event.

The material of the blanket 4 has a specific energy absorption ranging from 47 to 72 J•g⁻¹ and a longitudinal wave speed ranging from 6 to 15 km•s⁻¹, and preferably, is one of the following materials:
- aramid fibre, such as Kevlar®, or
- PBO ((Poly (p-phenylene-2, 6-benzobisoxazole))), such as Zylon®, or
- Ultra High Molecular Polyethylene (UHMWPE), such as Dyneema®, or
- polypropylene (PP).

According to the invention, the blanket 4 is arranged within the 0% - 20% of the chord length of the leading edge section ensuring that the bird is retained before reaching the front spar 5, and thus the front spar 5 is prevented from being damage.

In order to provide a good performance of the aerodynamic surface 1 against a bird strike, the thickness of the blanket 4 has to be of at least 1 mm. Thus, the invention ensures that no blanket perforation occurs, and also that the front spar of the torsion box remains undamaged.

According to another preferred embodiment, the leading edge section is obtained from outer and inner surfaces 2, 3 of carbon fibre pre-peg material. In such a case, the extremes of the blanket 4 are preferably coated with a wet resin for joining at least the inner surface 3 of the leading edge section.

Alternatively, and according to another preferred embodiment, the leading edge section is obtained from outer and inner surfaces 2, 3 of a carbon dry fibre material, and a Resin Transfer Molding process.

In a further alternative embodiment, the outer surface is obtained from carbon fibre material, and the inner surface is obtained from aramid dry fibre material. The outer surface can be obtained from carbon fibre pre-peg material or from carbon dry fibre material and a Resin Transfer Molding process.

In any case, the invention obtains an aerodynamic surface 1 comprising a leading edge section including a blanket 4 of braiding material, which provides enough strength to the leading edge section to fulfil the bird strike requirements, in a way in that cost and weight are saved with respect to traditional solutions.

The blanket 4 can be integrated on the aerodynamic surface 1 by means of co-curing or co-bonding manufacturing techniques, to obtain a unitary (solid) aerodynamic surface 1 in a one shot full integrated leading edge curing cycle. Figures 4-6 show different embodiments of integrated blankets solution.

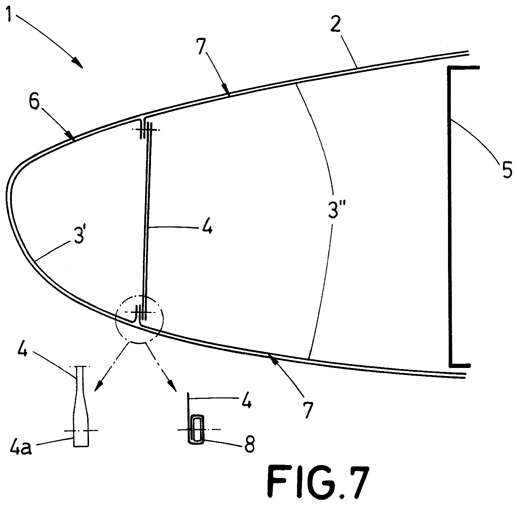

Alternatively, the blanket 4 can be assembled to cured preforms (at least to the inner surface preform) by conventional attaching means. Figure 7 shows an example of an aerodynamic surface 1 with this non-integrated blanket solution.

As shown in Figures 4-7 and according to a preferred embodiment, the leading edge section comprises an outermost C-shaped panel 6 having a first inner surface 3', and a pair of subsequent skin panels 7, each skin panel 7 having a second inner surface 3", wherein the inner surface 3 is formed by the first 3' and/or the second inner surfaces 3", and wherein the blanket 4 is arranged between the C-shaped panel 6 and the skin panels 7.

Preferably, the C-shaped panel 6 and the pair of skin panels 7 are made of cured carbon fiber reinforced polymer (CFRP). According to another preferred embodiment, the C-shaped panel 6 and the pair of skin panels 7 are of cured aramid fiber reinforced plastic (AFRP).

The blanket 4 is at least joined to the inner surface 3 to be able to retain a bird collision, but according to another preferred embodiment, the blanket 4 is preferably joined to both the outer 2 and the inner surfaces 3. This way, the blanket 4 is more securely attached, providing a more reliable impact resistance.

According to a preferred embodiment, and as shown in Figure 4, the blanket 4 has a C-shaped profile, and the extremes of the same are arranged between the outer and the inner surfaces 2, 3. This way, the blanket 4 is securely attached to both surfaces 2, 3.

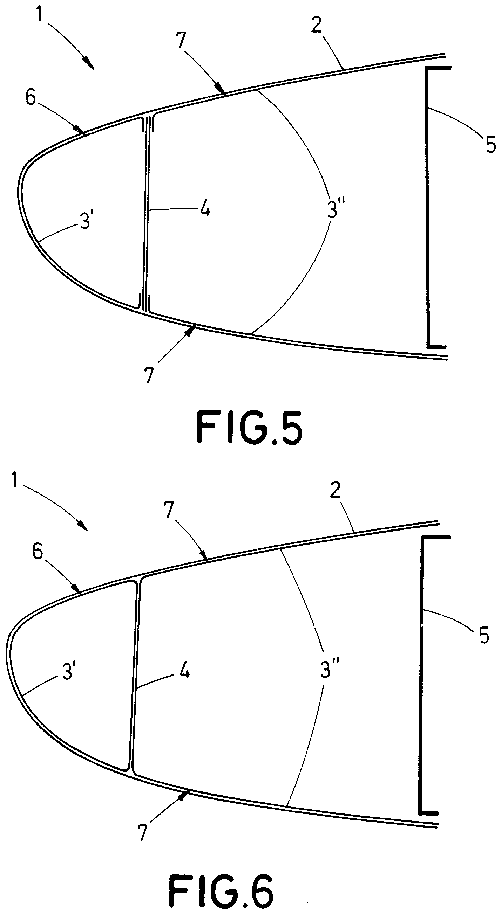

Figure 5 shows a second blanket integrated solution, in which the blanket 4 has an I-shaped profile, and the extremes of the same are arranged between the extremes of the C-shaped panel 6 and the skin panels 7. This way, the invention provides a simplified solution for the arrangement of the blanket 4, saving the weight of the excess of blanket 4 located between the outer and the inner surfaces 2, 3.

Figure 6 shows a third blanket integrated solution, in which the C-shaped panel 6 and the pair of skin panels 7 are made of cured aramid fiber reinforced plastic (AFRP), and the blanket 4 is built intrinsically.

As mentioned, the blanket 4 can be manufactured independently and be assembled later on to the outer and inner surfaces preforms to form the leading edge section. Secondary bonding or mechanical joints can be used for the joint.

Figure 7 shows an example of an aerodynamic surface 1 with non-integrated blanket solutions. The figure shows two mechanical fastening alternatives. One is configured by a blanket having hard cured extremes 4a, where attaching means are provided to fasten the blanket 4 to the panels 6, 7. The other one is configured by at least one cured plate 8 provided at the inner surface 3 for rolling up the blanket 4 around it. Preferably, the plate 8 is of cured carbon fiber reinforced polymer (CFRP). The last fastening alternative eases the blanket assembly, and improves the joint behavior against a bird strike event.

## Claims

1. An aerodynamic surface (1) for an aircraft comprising:
- a torsion box having a front spar (5), and
- a composite leading edge section, comprising:
- an outer surface (2) shaped with an aerodynamic leading edge profile,
- an inner surface (3) internally arranged with respect to the outer surface (2), and
- a blanket (4) spanwise arranged between the outermost point of the inner surface (3) and the front spar (5),- wherein the blanket (4) is made of a fibre material having a specific energy absorption ranging from 47 to 72 J•g⁻¹ and a longitudinal wave speed ranging from 6 to 15 km•s⁻¹,
- wherein the major part of the blanket (4) is dry fibre,
- wherein the blanket (4) is joined to at least two opposing areas of the inner surface (3) for absorbing a bird strike, to prevent the damage of the front spar (5), and
- wherein the blanket 4 is arranged within the 0% - 20% of the chord length of the leading edge section.

2. An aerodynamic surface (1) for an aircraft, according to claim 1, wherein the material of the blanket (4) is one of the following:
- aramid fibre, such as Kevlar®, or
- PBO ((Poly (p-phenylene-2, 6-benzobisoxazole))), such as Zylon®, or
- Ultra High Molecular Polyethylene (UHMWPE), such as Dyneema®, or
- polypropylene (PP).

3. An aerodynamic surface (1) for an aircraft, according to any of the preceding claims, wherein the leading edge section is obtained from outer and inner surfaces (2, 3) of carbon fibre pre-peg material.

4. An aerodynamic surface (1) for an aircraft, according to claim 3, wherein the extremes of the blanket (4) have a coating of a wet resin for joining at least the inner surface (3) of the leading edge section.

5. An aerodynamic surface (1) for an aircraft, according to any of claims 1-2, wherein the leading edge section is obtained from outer and inner surfaces (2, 3) of a carbon dry fibre material, and a Resin Transfer Molding process.

6. An aerodynamic surface (1) for an aircraft, according to any of claims 1-2, wherein the outer surface (2) is obtained from carbon fibre material, and the inner surface (3) is obtained from aramid dry fibre material.

7. An aerodynamic surface (1) for an aircraft, according to any of the preceding claims, wherein the leading edge section comprises an outermost C-shaped panel (6) having a first inner surface (3'), and a pair of subsequent skin panels (7), each skin panel (7) having a second inner surface (3"), wherein the inner surface (3) is formed by the first (3') and/or the second inner surfaces (3"), and wherein the blanket (4) is arranged between the C-shaped panel (6) and the skin panels (7).

8. An aerodynamic surface (1) for an aircraft, according to claim 7, wherein both the C-shaped panel (6) and the pair of skin panels (7) are of cured carbon fiber reinforced polymer material (CFRP) or of cured aramid fiber reinforced plastic (AFRP).

9. An aerodynamic surface (1) for an aircraft, according to any of the preceding claims, wherein the blanket (4) has a C-shaped profile, and wherein the extremes of the blanket (4) are arranged between the outer and the inner surfaces (2, 3).

10. An aerodynamic surface (1) for an aircraft, according to any of the preceding claims, wherein the blanket (4) is joined to both the outer and the inner surfaces (2, 3).

11. An aerodynamic surface (1) for an aircraft, according to any of claims 1-8, wherein the inner surface (3) comprises at least one cured plate (8) for fixing the blanket (4).

12. Method for manufacturing an aerodynamic surface (1) for an aircraft, comprising the steps of:
- providing a torsion box having a front spar (5),
- conforming a laminate (stack of, lay-up) from composite materials to obtain an outer surface preform with the shape of an aerodynamic leading edge profile,
- conforming another laminate from composite materials to obtain an inner surface preform,
- arranging the inner surface preform internally with respect to the outer surface preform,
- providing a blanket of fibre material having a specific energy absorption ranging from 47 to 72 J•g⁻¹ and a longitudinal wave speed ranging from 6 to 15 km•s⁻¹,
- assembling together the outer surface preform, the inner surface preform, and the blanket, to form a leading edge section preform wherein the blanket is spanwise arranged along the leading edge section between the outermost point of the inner surface preform and the front spar (5), wherein the major part of the blanket (4) is dry fibre, and wherein the blanket (4) is joined to at least two opposing areas of the inner surface preform for absorbing a bird strike, to prevent damage in a front spar (5), and
- curing together the leading edge section preform.

13. Method according to claim 12 wherein the preforms are obtained from a carbon fibre pre-preg material.

14. Method according to claim 12 wherein the preforms are obtained from a carbon dry fibre material, to which resin is injected in a Resin Transfer Molding process.

15. Method according to any of the claims 12-14, wherein the outer surface preform is obtained from carbon fibre material, and the inner surface preform is obtained from aramid dry fibre material.

## Patentansprüche

1. Aerodynamische Fläche (1) für ein Flugzeug, mit:
- einer Torsionszelle mit einem vorderen Holm (5), und
- einem Vorderkantenabschnitt aus Verbundwerkstoff, mit:
- einer Außenfläche (2), die mit einem aerodynamischen Vorderkantenprofil ausgebildet ist,
- einer Innenfläche (3), die in Bezug auf die Außenfläche (2) innen angeordnet ist, und
- einem Mantel (4), der zwischen dem äußersten Punkt der Innenfläche (3) und dem vorderen Holm (5) aufspannend angeordnet ist,
- wobei der Mantel (4) aus einem Fasermaterial mit einer spezifischen Energieabsorption im Bereich von 47 bis 72 J*g⁻¹ und einer Längswellengeschwindigkeit im Bereich von 6 bis 15 km*s⁻¹ hergestellt ist,
- wobei der größte Teil des Mantels (4) aus Trockenfaser ist,
- wobei der Mantel (4) mit mindestens zwei gegenüberliegenden Bereichen der Innenfläche (3) verbunden ist, um einen Vogelschlag zu absorbieren, um die Beschädigung des vorderen Holmes (5) zu verhindern, und
- wobei der Mantel (4) innerhalb von 0% - 20% der Sehnenlänge des Vorderkantenabschnitts angeordnet ist.

2. Aerodynamische Fläche (1) für ein Flugzeug nach Anspruch 1, wobei das Material des Mantels (4) eines der folgenden ist:
- Aramidfasern, wie z.B. Kevlar®, oder
- PBO ((Poly (p-Phenylen-2, 6-Benzobisoxazol))), wie beispielsweise Zylon®, oder
- ultrahochmolekulares Polyethylen (UHMWPE), wie Dyneema®, oder
- Polypropylen (PP).

3. Aerodynamische Fläche (1) für ein Flugzeug nach einem der vorhergehenden Ansprüche, wobei der Vorderkantenabschnitt aus Außen- und Innenflächen (2, 3) aus Kohlenstofffaser-PrePreg-Material erzeugt ist.

4. Aerodynamische Fläche (1) für ein Flugzeug nach Anspruch 3, wobei die Enden des Mantels (4) eine Beschichtung aus einem Nassharz aufweisen, um mindestens die Innenfläche (3) des Vorderkantenabschnitts zu verbinden.

5. Aerodynamische Fläche (1) für ein Flugzeug nach einem der Ansprüche 1-2, wobei der Vorderkantenabschnitt aus Außen- und Innenflächen (2, 3) aus einem Kohlenstoff-Trockenfasermaterial mit einem Harztransferformverfahren erzeugt ist

6. Aerodynamische Fläche (1) für ein Flugzeug nach einem der Ansprüche 1-2, wobei die Außenfläche (2) aus Kohlenstofffasermaterial und die Innenfläche (3) aus Aramid-Trockenfasermaterial erzeugt ist.

7. Aerodynamische Fläche (1) für ein Flugzeug nach einem der vorhergehenden Ansprüche, wobei der Vorderkantenabschnitt eine äußerste C-förmige Platte (6) mit einer ersten Innenfläche (3') und ein Paar nachgeordnete Außenhautplatten (7) umfasst, wobei jede Außenhautplatte (7) eine zweite Innenfläche (3') aufweist, wobei die Innenfläche (3) durch die erste (3') und/oder die zweite Innenfläche (3') gebildet ist, und wobei der Mantel (4) zwischen der C-förmigen Platte (6) und den Außenhautplatten (7) angeordnet ist.

8. Aerodynamische Fläche (1) für ein Flugzeug nach Anspruch 7, wobei sowohl die C-förmige Platte (6) als auch das Paar der Außenhautplatten (7) aus ausgehärtetem kohlenstofffaserverstärktem Polymermaterial (CFK) oder aus ausgehärtetem aramidfaserverstärktem Kunststoff (AFRP) bestehen.

9. Aerodynamische Fläche (1) für ein Flugzeug nach einem der vorstehenden Ansprüche, wobei der Mantel (4) ein C-förmiges Profil aufweist und wobei die Enden des Mantels (4) zwischen der Außen- und der Innenfläche (2, 3) angeordnet sind.

10. Aerodynamische Fläche (1) für ein Flugzeug nach einem der vorstehenden Ansprüche, wobei der Mantel (4) jeweils mit der Außen- und Innenfläche (2, 3) verbunden ist.

11. Aerodynamische Fläche (1) für ein Flugzeug nach einem der Ansprüche 1-8, wobei die Innenfläche (3) mindestens eine ausgehärtete Platte (8) zur Befestigung des Mantels (4) aufweist.

12. Verfahren zur Herstellung einer aerodynamischen Fläche (1) für ein Flugzeug, mit den Schritten des:
- Bereitstellens einer Torsionszelle mit einem vorderen Holm (5),
- Anpassens eines Laminats (Stapel, Schichtung) aus Verbundwerkstoffen, um eine Außenflächenvorform in der Form eines aerodynamischen Vorderkantenprofils zu erhalten,
- Anpassens eines weiteren Laminats aus Verbundwerkstoffen, um eine Innenflächenvorform zu erhalten,
- Anordnens der Innenflächenvorform innen in Bezug auf Außenflächenvorform,
- Bereitstellens eines Mantels aus Fasermaterial mit einer spezifischen Energieabsorption im Bereich von 47 bis 72 J*g⁻¹ und einer Längswellengeschwindigkeit im Bereich von 6 bis 15 km*s⁻¹,
- Zusammenfügens der Außenflächenvorform, der Innenflächenvorform und des Mantels zu einer Vorderkantenprofilvorform, wobei der Mantel entlang des Vorderkantenabschnitts sich zwischen dem äußersten Punkt der Innenflächenvorform und dem Vorderholm (5) aufspannend angeordnet ist, wobei der größte Teil des Mantels (4) Trockenfaser ist, und wobei der Mantel (4) mit mindestens zwei gegenüberliegenden Bereichen der Innenflächenvorform verbunden ist, um einen Vogelschlag zu absorbieren, um Schäden an einem vorderen Holm (5) zu vermeiden, und
- gemeinsamen Aushärtens der Vorderkantenprofilvorform.

13. Verfahren nach Anspruch 12, wobei die Vorformen aus einem Kohlenstofffaser-PrePreg-Material erzeugt werden.

14. Verfahren nach Anspruch 12, wobei die Vorformen aus einem Kohlenstoff-Trockenfasermaterial erzeugt werden, in das Harz in einem Harztransferformverfahren eingespritzt wird.

15. Verfahren nach einem der Ansprüche 12-14, wobei die Außenflächenvorform aus Kohlenstofffasermaterial und die Innenflächenvorform aus Aramid-Trockenfasermaterial erzeugt wird.

## Revendications

1. Surface aérodynamique (1) pour un aéronef comprenant :
- un caisson de torsion comportant un longeron avant (5), et
- une section de bord d'attaque composite, comprenant :
- une surface externe (2) formée avec un profil de bord d'attaque aérodynamique,
- une surface interne (3) agencée de façon interne par rapport à la surface externe (2), et
- une toile (4) agencée dans le sens de l'envergure entre le point le plus extérieur de la surface interne (3) et le longeron avant (5),- dans laquelle la toile (4) est faite d'un matériau de fibre ayant une absorption d'énergie spécifique dans la plage de 47 à 72 J•g⁻¹ et une vitesse d'onde longitudinale dans la plage de 6 à 15 km•s⁻¹,
- dans laquelle la majeure partie de la toile (4) est de la fibre sèche,
- dans laquelle la toile (4) est jointe à au moins deux zones opposées de la surface interne (3) pour absorber une collision avec un oiseau, afin d'éviter l'endommagement du longeron avant (5), et
- dans laquelle la toile 4 est agencée dans les 0 % - 20 % de la longueur de corde de la section de bord d'attaque.

2. Surface aérodynamique (1) pour un aéronef, selon la revendication 1, dans laquelle le matériau de la toile (4) est l'un des suivants :
- une fibre aramide, telle que Kevlar®, ou
- PBO ((poly(p-phénylène-2, 6-benzobisoxazole))), tel que Zylon®, ou
- du polyéthylène de masse molaire très élevée (UHMWPE), tel que Dyneema®, ou
- polypropylène (PP).

3. Surface aérodynamique (1) pour un aéronef, selon l'une quelconque des revendications précédentes, dans laquelle la section de bord d'attaque est obtenue à partir de surfaces externe et interne (2, 3) de matériau prépreg de fibre de carbone.

4. Surface aérodynamique (1) pour un aéronef, selon la revendication 3, dans laquelle les extrémités de la toile (4) ont un revêtement d'une résine humide pour joindre au moins la surface interne (3) de la section de bord avant.

5. Surface aérodynamique (1) pour un aéronef, selon l'une quelconque des revendications 1 - 2, dans laquelle la section de bord d'attaque est obtenue à partir de surfaces externe et interne (2, 3) d'un matériau de fibre sèche de carbone, et d'un procédé de moulage par transfert de résine.

6. Surface aérodynamique (1) pour un aéronef, selon l'une quelconque des revendications 1 - 2, dans laquelle la surface externe (2) est obtenue à partir d'un matériau de fibre de carbone, et la surface interne (3) est obtenue à partir d'un matériau de fibre sèche d'aramide.

7. Surface aérodynamique (1) pour un aéronef, selon l'une quelconque des revendications précédentes, dans laquelle la section de bord d'attaque comprend un panneau extérieur en forme de C (6) ayant une première surface interne (3'), et une paire de panneaux de revêtement subséquents (7), chaque panneau de revêtement (7) ayant une deuxième surface interne (3"), dans laquelle la surface interne (3) est formée par les première (3') et/ou deuxième surfaces internes (3"), et dans laquelle la toile (4) est agencée entre le panneau en forme de C (6) et les panneaux de revêtement (7).

8. Surface aérodynamique (1) pour un aéronef, selon la revendication 7, dans laquelle à la fois le panneau en forme de C (6) et la paire de panneaux de revêtement (7) sont d'un matériau polymère renforcé de fibre de carbone durci (CFRP) ou d'un plastique renforcé de fibre d'aramide durci (AFRP).

9. Surface aérodynamique (1) pour un aéronef, selon l'une quelconque des revendications précédentes, dans laquelle la toile (4) a un profil en forme de C, et dans laquelle les extrémités de la toile (4) sont agencées entre les surfaces externe et interne (2, 3).

10. Surface aérodynamique (1) pour un aéronef, selon l'une quelconque des revendications précédentes, dans laquelle la toile (4) est jointe à la fois aux surfaces externe et interne (2, 3).

11. Surface aérodynamique (1) pour un aéronef, selon l'une quelconque des revendications 1 - 8, dans laquelle la surface interne (3) comprend au moins une plaque durcie (8) pour fixer la toile (4).

12. Procédé de fabrication d'une surface aérodynamique (1) pour un aéronef, comprenant les étapes de :
- fourniture d'un caisson de torsion ayant un longeron avant (5),
- conformation d'un stratifié (empilement, superposition) à partir de matériaux composites pour obtenir une préforme de surface externe avec la forme d'un profil de bord d'attaque aérodynamique,
- conformation d'un autre stratifié à partir de matériaux composites pour obtenir une préforme de surface interne,
- agencement de la préforme de surface interne de façon interne par rapport à la préforme de surface externe,
- fourniture d'une toile de matériau de fibre ayant une absorption d'énergie spécifique dans la plage de 47 à 72 J•g⁻¹ et une vitesse d'onde longitudinale dans la plage de 6 à 15 km•s⁻¹,
- assemblage de la préforme de surface externe, la préforme de surface interne, et la toile ensemble, pour former une préforme de section de bord d'attaque dans laquelle la toile est agencée dans le sens de l'envergure le long de la section de bord d'attaque entre le point le plus extérieur de la préforme de surface interne et le longeron avant (5), dans lequel la majeure partie de la toile (4) est de la fibre sèche, et dans lequel la toile (4) est jointe à au moins deux zones opposées de la préforme de surface interne pour absorber une collision avec un oiseau, afin d'éviter d'endommager un longeron avant (5), et
- durcissement ensemble de la préforme de section de bord d'attaque.

13. Procédé selon la revendication 12, dans lequel les préformes sont obtenues à partir d'un matériau prépreg de fibre de carbone.

14. Procédé selon la revendication 12, dans lequel les préformes sont obtenues à partir d'un matériau de fibre sèche de carbone, dans lequel de la résine est injectée dans un procédé de moulage par transfert de résine.

15. Procédé selon l'une quelconque des revendications 12 - 14, dans lequel la préforme de surface externe est obtenue à partir d'un matériau de fibre de carbone, et la préforme de surface interne est obtenue à partir d'un matériau de fibre sèche d'aramide.
